Europäisches Patentamt

European Patent Office

Office européen des brevets

(11) Publication number: **0 261 495 B1**

## EUROPEAN PATENT SPECIFICATION

(45) Date of publication of patent specification: **15.01.92**   (51) Int. Cl.⁵: **G06F 15/02**

(21) Application number: **87113126.4**

(22) Date of filing: **08.09.87**

(54) **Electronic reminder.**

(30) Priority: **24.09.86 JP 225729/86**

(43) Date of publication of application:
**30.03.88 Bulletin  88/13**

(45) Publication of the grant of the patent:
**15.01.92 Bulletin  92/03**

(84) Designated Contracting States:
**DE FR GB**

(56) References cited:
**US-A- 3 999 050
US-A- 4 117 542
US-A- 4 276 541**

**IBM TECHNICAL DISCLOSURE BULLETIN, vol.
19, no. 7, December 1976, pages 2419-2423,
New York, US; H.P. HUBBARD: "Personal
computer"**

**FUNKSCHAU, vol. 50, no. 21, October 1978,
pages 1051-1052; K.D. WEBER:
"Taschenrechner als Kurzzeitwecker"**

(73) Proprietor: **SEIKO INSTRUMENTS INC.
31-1, Kameido 6-chome Koto-ku
Tokyo 136(JP)**

(72) Inventor: **Yagi, Shigeki
c/o Seiko Instruments Inc. 31-1, Kameido
6-chome
Koto-ku Tokyo(JP)**

(74) Representative: **Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
W-8000 München 2(DE)**

## Description

BACKGROUND OF THE INVENTION

This invention relates in general to an electronic display apparatus, in particular to an electronic reminder which electrically stores information on person's names, addresses, telephone number, etc., and displays the information on request.

In recent years, many kinds of portable electronic display apparatus are available. Electronic diary or electronic telephone directory is one of the such portable apparatus. The electronic diary which stores schedule and message, and which displays the message when real time is equal to the schedule time is disclosed in U.S.Pat.No. 3,999,050. And the electronic telephone directory which stores person's name and telephone number, and which retrieves the telephone number in accordance with the designated person's name is disclosed in U.S.Pat.No. 4,117,542.

A personal computer in the size of a calculator is disclosed in IBM Technical Disclosure Bulletin Vol. 19, No. 7, December 1976 which serves as a micro-memo to handle many types of personal requirements relating to organizing and using time. The device is designed to store and display all the dates and accompanying information that might be written on a calendar or an appointment book. The personal computer comprises a liquid crystal display, seven adressable fields for basic data, a memory and a power source. After the CLEAR key is pressed, the program of the personal computer starts and prompts the user to enter date, time and any other information as well as the alarm sound intensity. Predetermined values are available for unknown data and the data entry process is stopped when the CLEAR key is hit again. The dates and informations entered and stored are automatically displayed when the current date and time matches the date and time internally stored with each information and an acoustic signal is heard.

Document US-A-4 276 541 discloses an electronic display apparatus and calculator which can display a hand-written pattern at a preselected time. A desired hand-written pattern is introduced into an electronic apparatus through a matrix input means and stored in a matrix memory. A desired time is entered into the alarm time memory, at which the hand-written, memorized pattern is desired to be displayed on a matrix display panel and the alarm set key is activated. When the preselected time stored in the alarm time memory is identical with the current time information kept by a current time circuit the hand-written pattern stored in the matrix memory is displayed on the matrix display panel, and an audio alarm system generates an alarm sound.

Furthermore, document Funkschau Vol. 50, No. 21, 1978, pages 1051 to 1052 discloses a pocket calculator which serves as an alarm clock for short time periods. A simple calculator is equipped with an auxiliary electronic circuit basically comprising a clock generator, a decoder and sound generating means. The calculator is controlled by clock pulses generated by the clock generator in order to realize a down counting from the number of minutes entered via the keyboard of the calculator to zero and continously displaying the counter readout when the auxiliary electronic circuit is started. The alarm time is set in terms of a delay from the current time and the sound generating means are activated when the counter position "0" is displayed. The user is reminded that a time period is lapsed but no associated message data can be entered or displayed.

Shortcomings of prior art systems as described above become apparent when we make a telephone call to a person and we cannot contact him because his telephone is engaged or otherwise we receive an answer that he is not at his desk and will be back after while. In such a case, we may think that we will again make a telephone call after a while but we are likely to carelessly forget it once we have started another work. At such time, it is convenient to use the electronic diary. In a conventional electronic diary, however, setting an alarm time requires a plurality of steps and/or key operations; namely, the operation is complicated.

SUMMARY OF THE INVENTION

It is therefore the object of the present invention to provide an electronic reminder having high operability to set an alarm time by only one key operation and displaying information displayed at the time of the alarm time setting when the present time coincides with the alarm time.

According to the invention this object is accomplished by an electronic reminder for storing information and for displaying the same, comprising first input means for inputting information, memory means responsive to said first input means for storing said information, display means responsive to said memory means for displaying said information stored in said memory means, second input means for generating an instruction signal of alarm time setting, time keeping means for counting a present time, alarm time setting means, object information store means, comparison means responsive to said time keeping means and said alarm time setting means for comparing the present time with the alarm time, selective means connected in-between said object information store means and said displaying means for sending the contents of said object information store means to said display means for displaying the same when the present time coincides with the alarm time, and alarm means responsive to said comparison means for generating an alarm sound when the present time coincides with the alarm time, said electronic reminder being characterized in that said object information store means is responsive to said second input means for storing the information displayed at the time of activating said second input means in accordance with said instruction signal, and said alarm time setting means is responsive to said second input means and said time keeping means for setting alarm time, said alarm time setting means comprising added time store means for storing a time to be added, time computing means for adding the present time to the added time, and store means for storing the added result as the alarm time.

The advantages of the invention will become apparent and obvious to those skilled in the pertinent art upon referring to the following description provided in connection with the accompanying drawings, of which:

BRIEF DESCRIPTION OF DRAWINGS

Fig. 1 is a representative functional block diagram of an electronic reminder in accordance with the present invention.

Fig. 2 is a front view of the electronic reminder in accordance with the present invention.

Fig. 3 is a rough circuit diagram showing one embodiment of this invention.

Fig. 4 is a flow chart showing the flow of processing by the present invention.

Fig. 5 is a flow chart showing the processing on the alarm time setting key.

DESCRIPTION OF PREFERRED EMBODIMENT

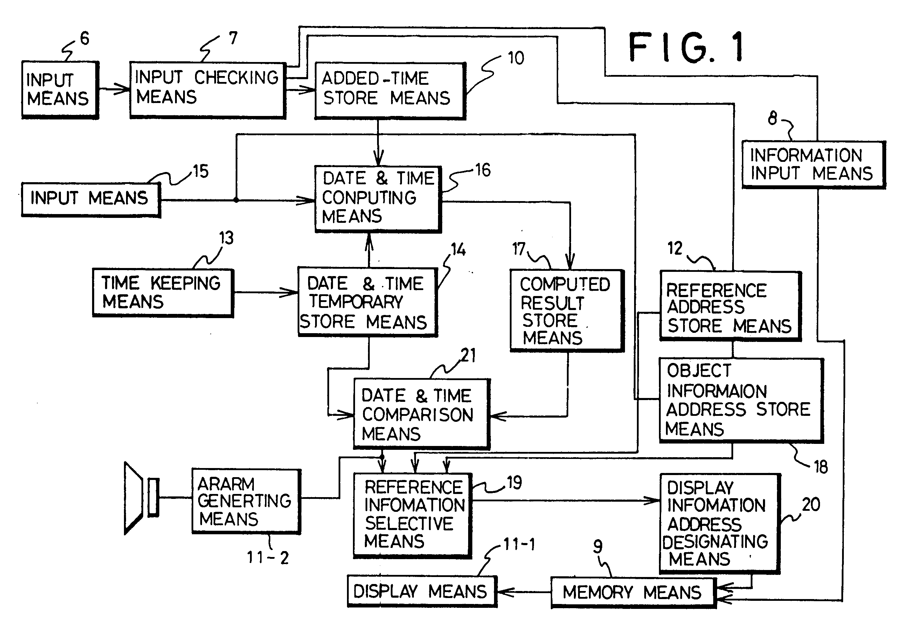

There is shown in Fig. 1 a functional structure of an electronic reminder. The operator inputs into the electronic reminder information on person's names, addresses, telephone numbers, etc., via first input means 6 having a plurality of keys comprising ten keys, character keys, and function keys. The electronic reminder has three functional modes. First mode is an information input mode for inputting the information into the reminder. Second mode is an information search mode for retrieving stored information and displaying them. And last mode is a delay time set mode for setting a alarm delay time. Any mode can be selected by depressing a mode select key. In the input mode, when a key is depressed, input checking means 7 checks which key is depressed and operates information input means 8 so as to store the information into memory means 9. In the search mode, when return key is depressed after being inputted key words, input checking means 7 generates a memory address of the information to be stored under the key word. The memory address is sent to a reference address store means 12.

This invention sets as an alarm setting time the current time plus "a particular time" by one keying-in operation. In the delay time set mode, the particular time can be set freely by the operator and is stored in added time store means 10 by input checking means 7.

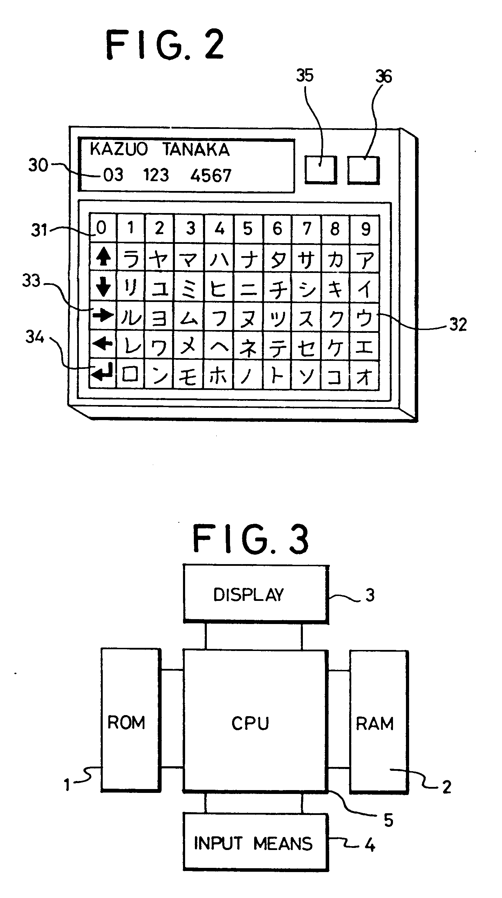

The electronic reminder has a shape to be held by one hand. A plurality of keys and a display panel are arranged on a case. A key arrangement of the electronic reminder is illustrated by way of example in Fig. 2. The display panel 30 is in upper portion of a front face. The electronic reminder has sixty two keys in this example. The keys comprise ten numerical keys 31, forty five Japanese character keys 32, four cursor keys 33, a return key 34, a mode select key 35 and an alarm time setting key 36 for setting the time which is current time plus "a particular time" as the alarm time.

The information already input can be taken out and displayed on the display panel 30 of the display means 11-1. The memory address of the displayed information is usually stored in a reference address store means 12. The address in the reference address store means 12 is changeable by the key operation of the first input means 6 while the memory address in the reference address store means 12 is written into an object information address store means 18 when second input means 15 is depressed.

Time keeping means 13 serves a clock and rewrites the contents of date and time temporary store means 14 at an interval of a second. When second input means 15 is depressed, a date and time computing means 16 adds the content of the added time store means 10 to the contents of the date and time temporary store means 14. And the result of the calculation is stored in computed result store means 17 as an alarm time.

Date and time comparison means 21 compares the present time stored in the date and time temporary store means 14 with the alarm time stored in the computed result store means 17, and sends control signals to an alarm generating means 11-2 and reference information selective means 19 when the present time coincides with the alarm time. The alarm generating means 11-2 generates drive signals for driving a buzzer when the control signal is inputted. The reference information selective means 19 receives the address sent from the reference address store means 12 and the address sent from the object information address store means 18. Usually the reference information selective means 19 outputs the address sent from the reference address store means 12. But the reference information selective means 19 outputs the address sent from the object information address store means 18, when the control signal from the date and time comparison means 21 is inputted. The output address of the reference information selective means 19 is sent to display information address designate means 20. The display information address designating means 20 addresses the information in the memory means 9. The information designated by the address is displayed by the display means 11-1 on the display panel 30.

Fig. 3 is a block diagram of the electronic reminder which includes a read only memory (ROM) 1 for storing a program, a random access memory (RAM) 2 for storing various information, and a central processing unit (CPU) 5 for executing the program stored in the ROM 1, for displaying particular information on a display 3, and for decoding the information from input means 4.

The operation occurring when the operator works second input means 15 will be described using one specific example.

First, assume that the operator is now reviewing to the information "Kazuo Tanaka 03-123-4567" to make a telephone call to Mr. Tanaka. Further assume that the operator made a telephone call to Mr. Tanaka in accordance with the displayed number, but unfortunately she could not contact Mr. Tanaka. The operator gives up talking now at once with Mr. Tanaka and considers to make a telephone call again after a while. Thus she presses the alarm time setting key 36 included in the second input means 15 so as not to forget it. When the second input means 15 is operated by the operator, the date and time computing means 16 adds the contents of added time store means 10 to the contents of date and time temporary store means 14 and stores the result in the computed result store means 17. Also assume that the time when the operator pressed the alarm time setting key was 3:00 PM, October 10 and that the present time to be added was 15 minutes, the information stored in the computed result store means 17 is then 3:15 PM, October 10. At the same time the object information address store means 18 receives address information as to where the contents of reference address store means 12, namely "Kazuo Tanaka 03-123-4567" is stored.

Thereafter the operator may input a new person's name or telephone number or reviewing to or other information inputted already. Therefore, the contents of reference address store means 12 may at once turn into the address differing from the address stored in the object information address store means 18.

Usually, the reference information selective means 19 selects reference address store means 12 and delivers the address information to display information address designating means 20.

The display information address designating means 20 takes out information to be referred to from the memory means 9 and the information is displayed by the display means 11-1.

The date and time comparison means 21 compares the contents of date and time temporary store means 14 with the contents of computed result store means 17. In this particular embodiment, when 15 minutes have elapsed since the alarm time setting key 36 was pressed the contents of the two store means 14 and 17 coincide. At this time, the reference information selective means 19 selects as reference information the information in the object information address store means 18 and the alarm generating means 11-2 generates an alarm signal. As a result, display means 11-1 again displays "Kazuo Tanaka 03-123-4567" and at the same time an alarm sound is generated.

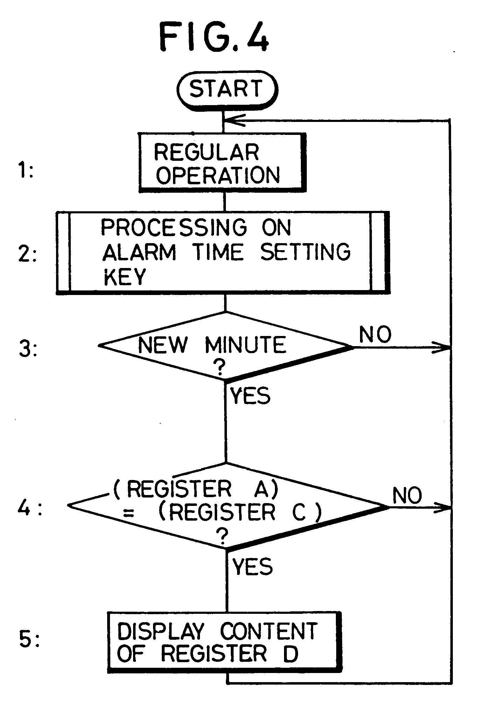

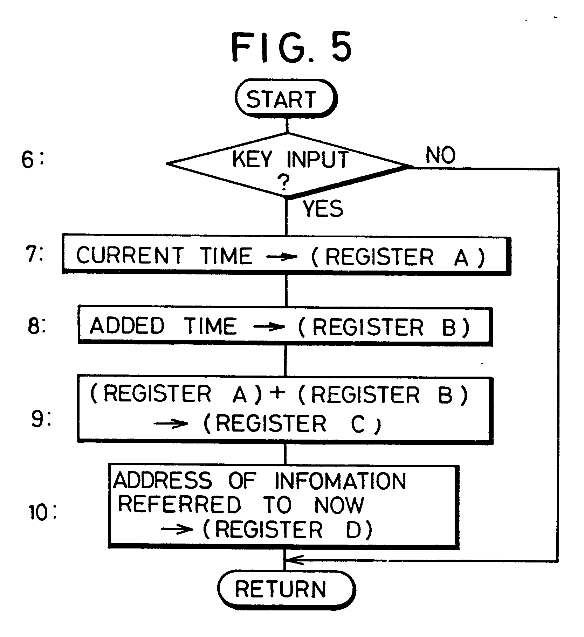

Figs. 4 and 5 show the above operation in a flowchart. The CPU 5 performs at all times regular operations including inputting, referring to information, etc. (step 1 in Fig. 4), the processing on "alarm time setting" key 36 (step 2), and the processing of the timekeeping result (steps 3, 4, and 5). The processing on the "alarm time setting" key 36 is as shown in Fig. 5.

First, it is checked whether or not the "alarm time setting" key 36 is pressed. If so (step 6 in Fig. 5), the contents of registers A and B are added and the result is stored in register C (step 9 in Fig. 5). At present, register A contains time information, and (step 7 in Fig. 5) register B contains a time to be added (step 8 in Fig.5).

An address indicating the place where the information referred to at this time is stored is in register D (step 10 in Fig.5).

At step 3 in Fig.4 the timekeeping result is monitored at all times and it is commanded that the contents of register A is compared to the contents of register C once per minute (step 4 in Fig. 4). As a result of the comparison at step 4 in Fig. 4, when the contents of register A coincides with that of register C, namely, when the current time has reached the alarm setting time, an alarm sound is generated and the storage information designated by the contents of register D is displayed (step 5 in Fig. 4). Thereafter the regular operation is resumed.

According to this embodiment, an alarm time setting operation is very much simplified. Namely, one operation can set an alarm time to a predetermined time after the current time. The operability of the electronic reminder is improved as well as keying errors due to complex key operations are completely eliminated, so that an electronic reminder very excellent in operability and reliability is provided.

## Claims

1. An electronic reminder for storing information and for displaying the same, comprising:

   first input means (6) for inputting information,

   memory means (9) responsive to said first input means (6) for storing said information,

   display means (11-1) responsive to said memory means (9) for displaying said information stored in said memory means (9),

   second input means (15) for generating an instruction signal of alarm time setting,

   time keeping means (13) for counting a present time,

   alarm time setting means (10, 14, 16, 17),

   object information store means (18),

   comparison means (21) responsive to said time keeping means (13) and said alarm time setting means (10, 14, 16, 17) for comparing the present time with the alarm time,

   selective means (19) connected inbetween said object information store means (18) and said displaying means (11-1) for sending the contents of said object information store means (18) to said display means (11-1) for displaying the same when the present time coincides with the alarm time, and

   alarm means (11-2) responsive to said comparison means (21) for generating an alarm sound when the present time coincides with the alarm time,

   **said electronic reminder being characterized in that**

   said object information store means (18) is responsive to said second input means (15) for storing the information displayed at the time of activating said second input means (15) in accordance with said instruction signal, and

   said alarm time setting means (10, 14, 16, 17) is responsive to said second input means (15) and said time keeping means (13) for setting alarm time, said alarm time setting means (10, 14, 16, 17) comprising added time store means (10) for storing a time to be added, time computing means (16) for adding the present time to the added time, and store means (17) for storing the added result as the alarm time.

2. The electronic reminder as claimed in claim 1, being characterized in that said object information store means (18) has object information address store means (18) for storing a memory address in which the information displayed at the time of activating said second input means (15) is stored.

3. The electronic reminder as claimed in claim 2, being characterized by further comprising addressing means (12, 18, 20) connected with said memory means (9) for designating a memory address in which the information to be displayed is stored.

4. The electronic reminder as claimed in claim 3, being characterized in that said addressing means (12, 18, 20) includes reference address store means (12) responsive to said first input means (6) for storing the reference memory address designated by said first input means (6).

5. The electronic reminder as claimed in claim 3, being characterized in that said reference address store means (12) is connected with said object information address store means (18) and the contents of the reference address store means (12) is written into said object information address store means (18) in accordance with said instruction signal.

## Revendications

1. Aide-mémoire électronique pour stocker une information et pour l'afficher, comprenant :

   un premier moyen d'entrée (6) pour entrer une information ;

   un moyen de mémoire (9) sensible audit premier moyen d'entrée (6) pour stocker ladite information ;

   un moyen d'affichage (11-1) sensible audit moyen de mémoire (9) pour afficher ladite information stockée dans ledit moyen de mémoire (9) ;

   un second moyen d'entrée (15) pour générer un signal d'instruction d'établissement d'heure d'alarme ;

   un moyen de maintien temporel (13) pour compter l'heure courante ;

   un moyen d'établissement d'heure d'alarme (10, 14, 16, 17) ;

un moyen de stockage d'information objet (18) ;

un moyen de comparaison (21) sensible audit moyen de maintien temporel (13) et audit moyen d'établissement d'heure d'alarme (10, 14, 16, 17) pour comparer l'heure courante à l'heure d'alarme ;

un moyen de sélection (19) connecté entre ledit moyen de stockage d'information objet (18) et ledit moyen d'affichage (11-1) pour envoyer les contenus dudit moyen de stockage d'information objet (18) audit moyen d'affichage (11-1) pour les afficher lorsque l'heure courante coïncide avec l'heure d'alarme ; et

un moyen d'alarme (11-2) sensible audit moyen de comparaison (21) pour générer un son d'alarme lorsque l'heure courante coïncide avec l'heure d'alarme,

ledit aide-mémoire électronique étant caractérisé en ce que :

ledit moyen de stockage d'information objet (18) est sensible audit second moyen d'entrée (15) pour stocker l'information affichée au moment de l'activation dudit second moyen d'entrée (15) en relation avec ledit signal d'instruction ; et

ledit moyen d'établissement d'heure d'alarme (10, 14, 16, 17) est sensible audit second moyen d'entrée (15) et audit moyen de maintien temporel (13) pour établir l'heure d'alarme, ledit moyen d'établissement d'heure d'alarme (10, 14, 16, 17) comprenant un moyen de stockage de temps ajouté (10) pour stocker un temps qui doit être ajouté, un moyen de calcul d'heure (16) pour ajouter l'heure courante au temps ajouté et un moyen de stockage (17) pour stocker le résultat de l'addition en tant qu'heure d'alarme.

2. Aide-mémoire électronique selon la revendication 1, caractérisé en ce que ledit moyen de stockage d'information objet (18) a un moyen de stockage d'adresse d'information objet (18) pour stocker une adresse mémoire à laquelle l'information affichée au moment de l'activation dudit second moyen d'entrée (15) est stockée.

3. Aide-mémoire électronique selon la revendication 2, caractérisé en ce qu'il comprend en outre un moyen d'adressage (12, 18, 20) connecté audit moyen de mémoire (9) pour indiquer une adresse de mémoire à laquelle l'information qui doit être affichée est stockée.

4. Aide-mémoire électronique selon la revendication 3, caractérisé en ce que ledit moyen d'adressage (12, 18, 20) inclut un moyen de stockage d'adresse de référence (12) sensible audit premier moyen d'entrée (6) pour stocker l'adresse mémoire de référence indiquée par ledit premier moyen d'entrée (6).

5. Aide-mémoire électronique selon la revendication 3, caractérisé en ce que ledit moyen de stockage d'adresse de référence (12) est connecté audit moyen de stockage d'adresse d'information objet (18) et en ce que les contenus du moyen de stockage d'adresse de référence (12) sont écrits dans ledit moyen de stockage d'adresse d'information objet (18) conformément audit signal d'instruction.

**Patentansprüche**

1. Elektronische Gedächtnisstütze zum Speichern von Informationen und zum Anzeigen derselben, die

eine erste Eingabevorrichtung (6) zur Eingabe von Informationen,

eine auf die erste Eingabevorrichtung (6) ansprechende Speichereinrichtung (9) zum Speichern der Informationen,

eine auf die Speichereinrichtung (9) ansprechende Anzeigevorrichtung (11-1) zum Anzeigen der in der Speichereinrichtung (9) gespeicherten Informationen,

eine zweite Eingabevorrichtung (15) zum Erzeugen eines Befehlssignals zur Alarmzeiteinstellung,

eine Zeitmeßeinrichtung (13) zum Zählen einer gegenwärtigen Zeit,

eine Alarmzeiteinstelleinrichtung (10, 14, 16, 17),

eine Objektinformationsspeichereinrichtung (18),

eine auf die Zeitmeßeinrichtung (13) und die Alarmzeiteinstelleinrichtung (10, 14, 16, 17) ansprechende Vergleicheinrichtung (21) zum Vergleichen der gegenwärtigen Zeit mit der Alarmzeit,

eine zwischen die Objektinformationsspeichereinrichtung (18) und die Anzeigevorrichtung (11-1) geschaltete Auswahleinrichtung (19) zum Zuführen des Inhalts der Objektinformationsspeichereinrichtung (18) zu der Anzeigevorrichtung (11-1) für dessen Anzeige, wenn die gegenwärtige Zeit mit der Alarmzeit übereinstimmt, und

eine auf die Vergleichseinrichtung (21) ansprechende Alarmvorrichtung (11-2) zum Erzeugen eines Alarmtons aufweist, wenn die gegenwärtige Zeit mit der Alarmzeit übereinstimmt,

wobei die elektronische Gedächtnisstütze dadurch gekennzeichnet ist, daß

die Objektinformationsspeichereinrichtung (18) auf die zweite Eingabevorrichtung (15) durch Speichern der zum Zeitpunkt der Betätigung der zweiten Eingabevorrichtung (15) entsprechend dem Befehlssignal angezeigten Informationen anspricht und

die Alarmzeiteinstelleinrichtung (10, 14, 16, 17) auf die zweite Eingabevorrichtung (15) und die Zeitmeßvorrichtung (13) durch das Einstellen der Alarmzeit anspricht, wobei die Alarmzeiteinstelleinrichtung (10, 14, 16, 17) eine Zusatzzeitspeichereinrichtung (10) zum speichern einer zu addierenden Zeit, eine Zeitrecheneinrichtung (16) zum Addieren der gegenwärtigen Zeit mit der Zusatzzeit und eine Speichereinrichtung (17) zum Speichern des Additionsergebnisses als Alarmzeit aufweist.

2. Elektronische Gedächtnisstütze nach Anspruch 1, dadurch gekennzeichnet, daß die Objektinformationsspeichereinrichtung (18) eine Objektinformations-Adressenspeichereinrichtung (18) zum Speichern einer Speicheradresse hat, an der die zum Zeitpunkt der Betätigung der zweiten Eingabevorrichtung (15) angezeigte Information gespeichert ist.

3. Elektronische Gedächtnisstütze nach Anspruch 2, gekennzeichnet durch eine an die Speichereinrichtung (9) angeschlossene Adressiereinrichtung (12, 18, 20) zum Bestimmen einer Speicheradresse, an der die anzuzeigende Information gespeichert ist.

4. Elektronische Gedächtnisstütze nach Anspruch 3, dadurch gekennzeichnet, daß die Adressiereinrichtung (12, 18, 20) eine auf die erste Eingabevorrichtung (6) ansprechende Bezugsadressenspeichereinrichtung (12) zum Speichern der durch die erste Eingabevorrichtung (6) bestimmten Bezugsspeicheradressen enthält.

5. Elektronische Gedächtnisstütze nach Anspruch 3, dadurch gekennzeichnet, daß die Bezugsadressenspeichereinrichtung (12) mit der Objektinformationsadressenspeichereinrichtung (18) verbunden ist und entsprechend dem Befehlssignal der Inhalt der Bezugsadressenspeichereinrichtung (12) in die Objektinformationsadressenspeichereinrichtung (18) eingeschrieben wird.

FIG. 1

6
INPUT MEANS

7
INPUT CHECKING MEANS

10
ADDED-TIME STORE MEANS

8
INFORMATION INPUT MEANS

15
INPUT MEANS

16
DATE & TIME CONPUTING MEANS

13
TIME KEEPING MEANS

14
DATE & TIME TEMPORARY STORE MEANS

17
COMPUTED RESULT STORE MEANS

12
REFERENCE ADDRESS STORE MEANS

21
DATE & TIME COMPARISON MEANS

18
OBJECT INFORMAION ADDRESS STORE MEANS

11-2
ARARM GENERTING MEANS

19
REFERENCE INFOMATION SELECTIVE MEANS

20
DISPLAY INFOMATION ADDRESS DESIGNATING MEANS

11-1
DISPLAY MEANS

9
MEMORY MEANS

EP 0 261 495 B1

EP 0 261 495 B1

# FIG. 2

# FIG. 3

9

# FIG.4

```
        ( START )
             │
   ┌─────────────────┐
1: │ REGULAR         │
   │ OPERATION       │
   └─────────────────┘
             │
   ┌─────────────────────┐
   │ PROCESSING ON       │
2: │ ALARM TIME SETTING  │
   │ KEY                 │
   └─────────────────────┘
             │
          ╱     ╲            NO
3:      ╱  NEW MINUTE ╲ ──────────▶
        ╲     ?     ╱
          ╲     ╱
           YES
             │
          ╱        ╲          NO
4:      ╱ (REGISTER A) ╲ ─────────▶
        ╲ = (REGISTER C) ╱
          ╲    ?    ╱
           YES
             │
   ┌─────────────────────┐
5: │ DISPLAY CONTENT     │
   │ OF REGISTER D       │
   └─────────────────────┘
```

10

# FIG. 5

6: KEY INPUT ? — NO / YES

7: CURRENT TIME → (REGISTER A)

8: ADDED TIME → (REGISTER B)

9: (REGISTER A) + (REGISTER B) → (REGISTER C)

10: ADDRESS OF INFOMATION REFERRED TO NOW → (REGISTER D)

RETURN